Europäisches Patentamt

European Patent Office

Office européen des brevets

(11) Veröffentlichungsnummer: **0 358 877**
**A2**

(12) **EUROPÄISCHE PATENTANMELDUNG**

(21) Anmeldenummer: 89112720.1

(22) Anmeldetag: **12.07.89**

(51) Int. Cl.5: **G01K 7/12**

(30) Priorität: 07.09.88 DE 3830415

(43) Veröffentlichungstag der Anmeldung:
**21.03.90 Patentblatt 90/12**

(84) Benannte Vertragsstaaten:
**DE FR GB IT**

(71) Anmelder: **ERSA Ernst Sachs KG GmbH & Co.**
**Leonhard-Karl-Strasse 24**
**D-6980 Wertheim / Main(DE)**

(72) Erfinder: **Göckel, Heinrich, Dipl.-Ing.**
**Speckspitze 22**
**D-6981 Faulbach(DE)**
Erfinder: **Gillig, Thomas, Dipl.-Ing.**
**Von-Imhof-Strasse 14**
**D-8702 Helmstadt(DE)**

(74) Vertreter: **Riebling, Peter, Dr.-Ing.**
**Patentanwalt Rennerle 10 Postfach 31 60**
**D-8990 Lindau/B.(DE)**

(54) **Klemmstellenkopensationsmessung bei Temperaturreglern und Messgeräten.**

(57) Beschrieben wird eine Klemmstellenkompensationsmessung bei Temperaturreglern und Meßgeräten zur Erfassung eines Istwertes mittels Thermoelementmessung mit einem Steckeranschluß für das Thermoelement und mit einem Klemmstellenmeßelement, wobei das Thermoelement über eine Meßleitung am Gegenstecker angeordnet ist.

Aufgabe ist es, eine Klemmstellenkompensationsmessung so weiterzubilden, daß Meßfehler weitgehend vermieden werden.

Hierzu ist es vorgesehen, daß das Klemmstellenmeßelement direkt im Gegenstecker angeordnet ist und direkt an der physikalischen Klemmstelle über mindestens einen zusätzlichen Steckerkontakt mit der Elektronik des Gerätes in Verbindung steht.

## Klemmstellenkompensationsmessung bei Temperaturreglern und Meßgeräten

Die Erfindung betrifft eine Klemmstellenkompensationsmessung bei Temperaturreglern und Meßgeräten zur Erfassung eines Istwertes mittels Thermoelementmessung mit einem Steckeranschluß für das Thermoelement und mit einem Klemmstellenmeßelement, wobei das Thermoelement über eine Meßleitung am Gegenstecker angeordnet ist. Bei Thermoelementmessungen muß bekannterweise eine Klemmstellenkompensation durchgeführt werden. Bei bekannten Geräten dieser Art, speziell bei Reglern/Meßgeräten mit Steckeranschluß für das Thermoelement, z.B. Einschubgeräte, Lötkolbenregelung, ist das Klemmstellenmeßelement auf der Geräteplatine an den Steckerkontakten angebracht. Bei den bekannten Geräten ergibt sich durch die Anordnung des Meßstellenelements an den Steckerkontakten der Geräteplatine nachteilig ein erheblicher Meßfehler. Die physikalische Klemmstelle befindet sich nämlich nicht an den Steckerkontakten im Bereich der Geräteplatine, sondern vielmehr im Gegenstecker bzw. in der Buchse zum Steckeranschluß an der Platine, dort wo das Thermoelement bzw. die Ausgleichsleitung mit dem Material des Gegensteckers (z.B. Cu) verbunden ist. Messungen haben gezeigt, daß bei Lötstationen Temperaturdifferenzen von 8 Grad und mehr auftreten, die als Messfehler wirksam werden.

Aufgabe der Erfindung ist es, das Meßelement an der wahren physikalischen Klemmstelle anzuordnen, so daß Meßfehler vermieden werden.

Zur Lösung der Aufgabe ist es vorgesehen, daß das Klemmstellenmeßelement ebenfalls im Gegenstecker angeordnet ist und direkt an der physikalischen Klemmstelle über mindestens einen zusätzlichen Steckkontakt mit der Elektronik des Gerätes in Verbindung steht.

Das Wesen der Erfindung liegt darin, daß die direkte physikalische Klemmstelle Berücksichtigung findet und daß dort in erfinderischer Weise das Klemmstellen-Meßelement angeordnet ist.

Zur Lösung der gestellten Aufgabe sind also mehrere Ausführungsformen gegeben.

In einer ersten Ausführungsform ist es vorgesehen, daß das Klemmstellenmeßelement direkt an der physikalischen Klemmstelle über zwei zusätzliche Steckerkontakte mit der Elektronik des Gerätes in Verbindung steht.

In einer anderen Ausführungsform ist es vorgesehen, daß das Klemmstellenmeßelement direkt an der physikalischen Klemmstelle z. B. über einen schon vorhandenen Steckkontakt für den Thermoelementen-Schenkel und einen zusätzlichen Steckkontakt mit der Elektronik verbunden ist.

Alle in den Unterlagen einschließlich der Zusammenfassung offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:

Figur 1: eine Geräteanordnung in schematischer Darstellung mit der Anordnung des Klemmstellenmeßelements,

Figur 2: das Klemmstellenmeßelement in der Anordnung am Gegenstecker in perspektivischer Darstellung.

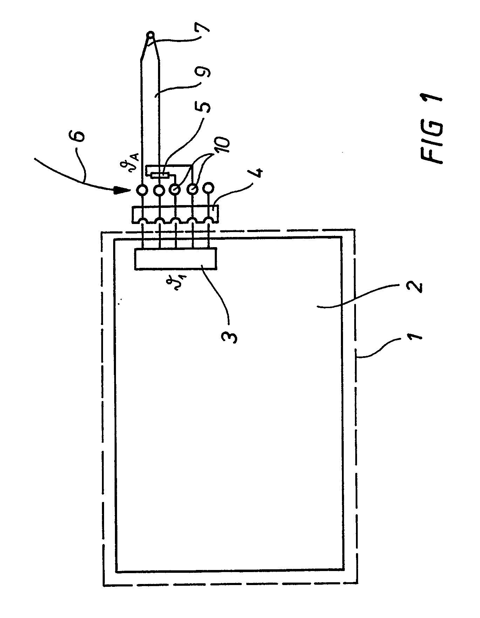

Gemäss Figur 1 ist ein Gehäuse 1 dargestellt mit einer darin untergebrachten Geräteplatine 2. Bisher wurde das Klemmstellenmeßelement 5 auf der Geräteplatine 2 angeordnet. Nach Figur 1 ist ein Stecker 3 dargestellt mit einem Gegenstecker 4, an dem nun an der wahren physikalischen Klemmstelle 6 das Klemmstellenmeßelement 5 angeordnet ist.

Vom Gegenstecker 4 ausgehend ist weiterhin die Meßleitung 9 mit dem Thermoelement 7 gezeigt.

Nach Figur 1 befindet sich das Klemmstellenmeßelement 5 an zusätzlichen Steckerkontakten 10.

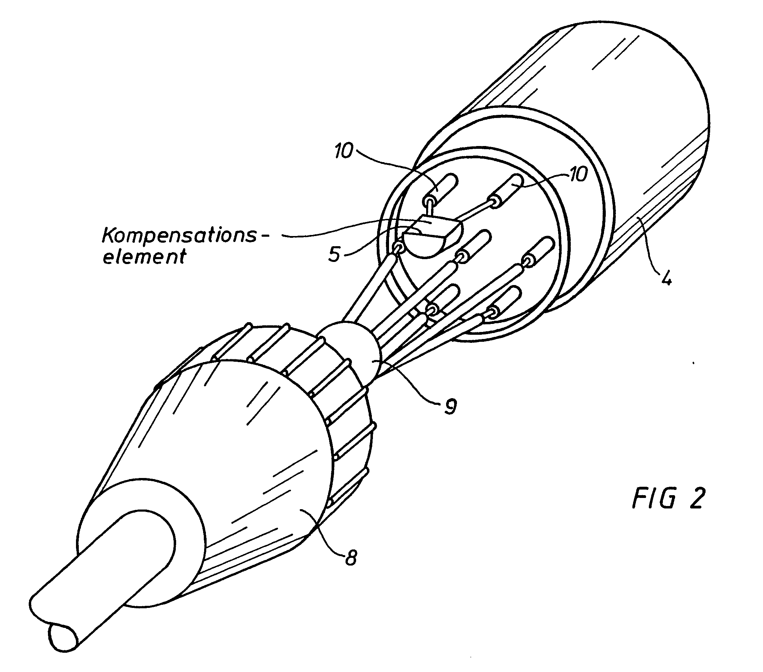

Gemäss Figur 2 ist der Gegenstecker 4 ersichtlich mit der Abdeckung 8.

Das Klemmstellenmeßelement ist an zusätzlichen Steckerkontakten 10 direkt an der physikalischen Klemmstelle im Gegenstecker 4 angeordnet. Die übrigen Steckerkontakte des Gegensteckers 4 sind mit der Meßleitung 9 verbunden, die zum Thermoelement 7 führt.

Nach Figur 2 wird die Abdeckung 8 auf den Gegenstecker 4 aufgeschoben oder aufgeschraubt, wobei dann das Klemmstellenmeßelement 5 vorteilhaft in Bezug auf die Meßanordnung mit der Umgebungstemperatur in Verbindung steht.

### ZEICHNUNGS-LEGENDE

1 Gehäuse
2 Geräteplatine
3 Stecker
4 Gegenstecker

5 Klemmstellenmeßelement
6 physikalische Klemmstelle
7 Thermoelement
8 Abdeckung
9 Meßleitung
10 Steckerkontakte

**Ansprüche**

1. Klemmstellenkompensationsmessung bei Temperaturreglern und Meßgeräten zur Erfassung eines Istwertes mittels Thermoelementmessung mit einem Steckeranschluß für das Thermoelement und mit einem Klemmstellen-Meßelement, wobei das Thermoelement über eine Meßleitung am Gegenstecker angeordnet ist, **dadurch gekennzeichnet**, daß das Klemmstellen-Meßelement (5) ebenfalls im Gegenstecker (4) angeordnet ist und direkt an der physikalischen Klemmstelle (6) über mindestens einen zusätzlichen Steckerkontakt (10) mit der Elektronik des Gerätes in Verbindung steht.

2. Klemmstellenkompensation nach Anspruch 1, **dadurch gekennzeichnet,** daß das Klemmstellen-Meßelement (5) direkt an der physikalischen Klemmstelle (6) über zwei zusätzliche Steckerkontakte (10) mit der Elektronik des Gerätes in Verbindung steht.

3. Klemmstellenkompensation nach Anspruch 1, **dadurch gekennzeichnet,** daß das Klemmstellen-Meßelement (5) direkt an der physikalischen Klemmstelle (6) über einen schon vorhandenen Steckerkontakt für den Thermoelementen-Schenkel und einen zusätzlichen Steckerkontakt (10) mit der Elektronik des Gerätes in Verbindung steht.

FIG 1

E 473

Kompensationselement

10

10

5

9

4

8

FIG 2

EP 0 358 877 A2

E 473